# EUROPÄISCHE PATENTANMELDUNG

(11) **EP 0 941 967 A2**
(43) Veröffentlichungstag der Anmeldung: **15.09.1999**
(21) Anmeldenummer: 99103557.7
(22) Anmeldetag: 24.02.1999
(51) Int. Cl.: C02F 1/00, C02F 1/44

(54) **Verfahren zur Aufbereitung von verbrauchten Rückspülwasser**

(30) Priorität: 11.03.1998 DE 19810388
(71) Anmelder: WABAG Wassertechnische Anlagen GmbH, 95326 Kulmbach (DE)
(72) Erfinder: Hagen, Klaus Dr., 95326 Kulmbach (DE); Neubauer, Horst, 95326 Kulmbach (DE); Sauerschell, Werner, 95359 Kasendorf (DE); Mende, Ulrich, 95326 Kulmbach (DE); Reis, Michael, 95326 Kulmbach (DE)
(74) Vertreter: Radünz, Ingo, Dipl.-Ing.

(57) **Zusammenfassung**

Wasser aus der Rückspülung von Filtern (5) zur Reinigung von Badewasser aus Schwimmbecken wird dadurch aufbereitet, daß es nach der Rückspülung der Filter insgesamt oder teilweise in einem Speicherbehälter (9) zwischengespeichert wird. Ein stärker mit Schmutzstoffen belastete Teilstrom des Rückspülwassers wird als Abwasser abgeführt. Der Teilstrom des Rückspülwassers, der schwächer mit Schmutzstoffen belastet ist, wird einer Mikro- oder Ultrafiltration (12) zugeführt, deren Filtrat in den Badewasserkreislauf (14) zurückgeführt wird.

## Beschreibung

Die Erfindung betrifft ein Verfahren zur Aufbereitung von Wasser aus der Rückspülung von Filtern zur Reinigung von Badewasser aus Schwimmbecken mit den Merkmalen des Oberbegriffes des Anspruches 1.

Das verbrauchte Rückspülwasser wird bei den meisten Schwimmbädern in die öffentliche Kanalisation abgeleitet. In einigen Fällen wird das verbrauchte Rückspülwasser in einem Auffangbehälter zwischengespeichert, in den gegebenenfalls Chemikalien zur Umwandlung des freien Chlors und zur Agglomeration der Schmutzstoffe zudosiert werden. Nach einer Absetzphase wird z. B. das klare Wasser aus dem Auffangbehälter in einen Vorfluter eingeleitet und der Schlamm in die Kanalisation abgeführt. Bei Ableitung in die Kanalisation entstehen für die Betreiber der Schwimmbäder hohe Entsorgungskosten wegen der hohen Wassermenge, die abgeleitet werden muß.

Der Erfindung liegt die Aufgabe zugrunde, das gattungsgemäße Verfahren so zu gestalten, daß bei der Rückspülung von Filtern in Schwimmbädern der Anfall an Abwasser minimiert und der Bedarf an Frischwasser vermindert wird.

Diese Aufgabe wird bei einem gattungsgemäßen Verfahren erfindungsgemäß durch die kennzeichnenden Merkmale des Anspruches 1 gelöst. Vorteilhafte Ausgestaltungen der Erfindung sind Gegenstand der Unteransprüche.

Die Aufbereitung von verbrauchtem Rückspülwasser ist an sich bekannt. Im Rahmen der Erfindung wird dieses bekannte Verfahren auf das Filtern von Schwimmbadwasser in der Weise angewendet, daß nach der Rückspülung der Filter nur ein Teil des verbrauchten Rückspülwassers, der die Hauptmenge der Feststoffe enthält, als Abwasser in die öffentliche Kanalisation abgeleitet wird. Der andere Teil wird soweit von Schwebstoffen und gegebenenfalls von anderen Bestandteilen befreit, daß er als Zusatzwasser dem Badewasser zugesetzt werden kann. Auf diese Weise können der Frischwasserbedarf und der Abwasseranfall möglichst gering gehalten werden.

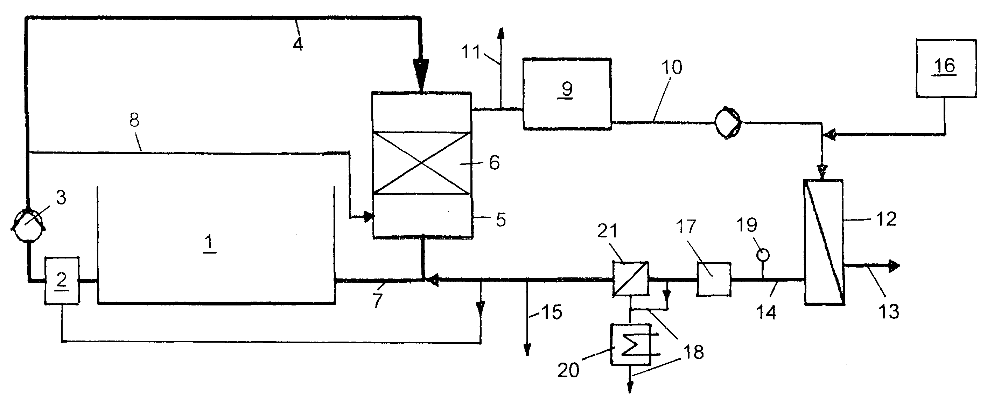

Ein Ausführungsbeispiel der Erfindung wird im folgenden an Hand der Zeichnung näher erläutert. Die Zeichnung stellt das Fließbild eines Verfahrens zur Aufbereitung von verbrauchtem Rückspülwasser dar.

Aus einem Schwallwasserbehälter 2, der aus dem Überlauf eines Schwimmbeckens 1 gespeist wird, wird Badewasser zu seiner Reinigung und zum Keimfreimachen kontinuierlich mit Hilfe einer Pumpe 3 entnommen und über eine Leitung 4 einem Filter 5 zugeführt. Das Filter 5 kann aus mehreren Filterschichten 6 aufgebaut sein, von denen z. B. die obere aus Aktivkohle und die untere aus Quarzkies besteht. Der in dem Badewasser enthaltene Grobschmutz, wie Haare und ähnliches und die Schwebstoffe werden von dem Filter 5 zurückgehalten. Nach dem Durchlaufen durch das Filter 5 wird das gereinigte Badewasser mit Chlor oder ähnlichen Mitteln versetzt und über eine Rückführleitung 7 zu dem Schwimmbecken 1 zurückgeführt.

Das Filter 5 muß in zeitlichen Abständen von z. B. einigen Tagen rückgespült werden. Dazu wird das Filter 5 außerhalb des Badebetriebes mit Hilfe von Rückspülwasser rückgespült. Als Rückspülwasser wird Badewasser verwendet. Dieses Rückspülwasser wird dem Schwallwasserbehälter 2 über eine Leitung 8 mit Hilfe der Pumpe 3 entnommen und entgegen der Filterrichtung durch das Filter 5 gedrückt. Dabei trägt das Rückspülwasser die in dem Filter 5 mechanisch festgehaltenen Bestandteile, wie den groben Schmutz und die Schwebstoffe aus dem Filter 5 aus. Das zu Beginn der Rückspülung anfallende Rückspülwasser ist stärker mit Schmutz und Schwebstoffen belastet als das nachfolgende.

Das verbrauchte Rückspülwasser wird nach dem Austritt aus dem Filter 5 zumindest teilweise in einem Speicherbehälter 9 zwischengespeichert. Die Speicherung des schwächer belasteten Teilstromes ist vorteilhaft, um die Durchsatzleistung der später beschriebenen Aufbereitungsanlage möglichst gering zu halten und diese Aufbereitungsanlage soweit als möglich kontinuierlich zu betreiben. Dazu kann das gesamte Rückspülwasser in dem Speicherbehälter 9 aufgefangen werden. In diesem Speicherbehälter 9 erfolgt die Trennung des Rückspülwassers z. B. durch Schlammspiegel- oder Niveaumessung in den schwächer und den stärker belasteten Teilstrom. Der schwächer belastete Teilstrom wird aus dem Speicherbehälter 9 über eine Leitung 10 der Aufbereitungsanlage zugeführt. Der stärker belastete Teilstrom wird verworfen und über eine Leitung 11 in die Kanalisation abgeführt. Der stärker belastete Teilstrom kann auch ohne gespeichert zu werden direkt abgeführt werden.

Die Speicherung des schwächer belasteten Teilstroms mit dem Ziel der Reduzierung des Speichervolumens kann durch unterschiedliche Parameter vorgenommen werden. Der Gehalt an Schmutzstoffen kann empirisch ermittelt werden und dementsprechend die Trennung der Teilströme fest eingestellt werden, wie z. B. durch Mengen- oder Zeitmessung bei der Filterrückspülung. Es ist ebenso möglich, den Gehalt an Schmutzstoffen durch Online-Messungen im ablaufenden Volumenstrom zu bestimmen und den Zeitpunkt der Trennung der beiden Teilströme zu variieren, wie z. B. durch Trübungs- oder Konzentrationsmessung.

Der schwächer belastete Teilstrom des Rückspülwassers wird über die Leitung 10 einer Filtration 12 zugeführt, die aus einer als Mikro- oder als Ultrafiltration ausgebildeten Membranfiltereinheit besteht. Über die Filtration 12 wird zwischen zwei Rückspülphasen des Filters 5 der gesamte schwächer belastete Teilstrom des in dem Speicherbehälter 9 gespeicherten Rückspülwassers kontinuierlich abgearbeitet. Die in dem Rückspülwasser enthaltenen ungelösten Stoffe werden in der Filtration 12 vollständig zurückgehalten. Die zurückgehaltenen Stoffe werden nach einer Rückspülung der Filtration 12 über eine Leitung 13 ebenso wie der stärker belastete Teilstrom des Rückspülwassers üblicherweise in die öffentliche Kanalisation abgeführt. Das in der Filtration 12 gewonnene Filtrat wird entweder über eine Filtratleitung 14 dem Schwimmbecken 1 bzw. dem Schwallwasserbehälter 2 oder über die Leitung 15 einem Vorfluter zugeführt.

In dem Filtrat der Filtration 12 können noch sogenannte adsorbierbare organische Halogenverbindungen (AOX) sowie Trihalogenmethanverbindungen (THM) enthalten sein. Diese Stoffe entstehen durch eine Umsetzung des freien Chlors mit organischen Verbindungen, die durch die Badegäste in das Badewasser eingetragen werden. Die genannten Stoffe können nicht ohne eine weitere Maßnahme durch die Filtration 12 aus dem Rückspülwasser entfernt werden. Um eventuell erhöhten Qualitätsanforderungen gerecht werden zu können, ist eine Behandlung mit Aktivkohle vorgesehen. Pulverförmige Aktivkohle kann aus einem Zugabebehälter 16 dem schwächer belasteten Teilstrom vor dessen Eintritt in die Filtration 14 zugesetzt werden. Es ist auch möglich, das Filtrat über ein Aktivkohlefilter 17 zu leiten.

Bei einem zu hohen Gehalt des Filtrats an gelösten Stoffen besteht die Möglichkeit, das Filtrat über eine Leitung 18 in die Kanalisation abzuleiten. Zu diesem Zweck ist nach der Filtration 12 in der Filtratleitung 14 ein Meßgerät 19 angeordnet. Dieses Meßgerät 19 ermittelt den Gehalt an gelösten Stoffen. Hierbei kann es sich z. B. um eine Leitfähigkeits-, eine Chlorid-, Nitratmessung oder ähnliche Messungen handeln.

Die gemessenen Werte können als Regelparameter in der Weise benutzt werden, daß bis zum Erreichen eines vorgegebenen Grenzwertes das Filtrat über die Filtratleitung 14 oder die Leitung 15 geführt wird. Nach Überschreiten des Grenzwertes erfolgt eine Abfuhr des Filtrats über die Leitung 18 in die Kanalisation.

Das Filtrat, das über die Kanalisation oder den Vorfluter aus dem Prozeß herausgeleitet wird, wird einem Wärmetauscher 20 zugeführt, der von Frischwasser durchströmt ist. Der Wärmetauscher 20 senkt die Ablauftemperatur des abgeführten Filtrats und wärmt das Frischwasser auf, das dem Badewasserkreislauf zugefügt wird.

Bei einem zu hohen Gehalt des Filtrats an gelösten Stoffen besteht weiterhin die Möglichkeit, das Filtrat mittels einer Entsalzungseinheit 21 zu behandeln. Hierbei kann sowohl der gesamte Strom als auch ein Teilstrom des Filtrates behandelt werden. Diese Entsalzung dient dazu, eine unerwünschte Anreicherung von Salzen im Badewasserkreislauf zu verhindern. Nach der Behandlung in der Entsalzungseinheit 21 wird der salzarme Teilstrom über die Leitung 14 oder die Leitung 15 weitergeführt. Der salzreiche Teilstrom aus der Entsalzungseinheit 21 wird über die Leitung 18 abgeführt.

## Patentansprüche

1. Verfahren zur Aufbereitung von Wasser aus der Rückspülung von Filtern zur Reinigung von Badewasser aus Schwimmbecken, bei dem das Rückspülwasser nach der Rückspülung der Filter insgesamt oder teilweise in einem Speicherbehälter zwischengespeichert und anschließend nachbehandelt wird, dadurch gekennzeichnet, daß ein stärker mit Schmutzstoffen belastete Teilstrom des Rückspülwassers als Abwasser abgeführt wird und daß ein Teilstrom, der schwächer mit Schmutzstoffen belastet ist, einer Mikro- oder Ultrafiltration zugeführt wird und daß das Filtrat der Mikro- oder Ultrafiltration in den Badewasserkreislauf zurückgeführt wird.

2. Verfahren nach Anspruch 1 dadurch gekennzeichnet, daß die Aufteilung der Teilströme über die Menge des erzeugten Rückspülwassers oder über die Dauer des Rückspülvorgangs erfolgt.

3. Verfahren nach Anspruch 2, dadurch gekennzeichnet, daß die Aufteilung der beiden Teilströme durch den Gehalt an Schmutzstoffen mittels geeigneter Meßverfahren wie Trübungs-, Schlammspiegel- oder Konzentrationsmessung erfolgt.

4. Verfahren nach einem der Ansprüche 1 bis 3, dadurch gekennzeichnet, daß der schwächer belastete Teilstrom vor dem Eintritt in die Mikro- oder Ultrafiltration mit Aktivkohle versetzt wird.

5. Verfahren nach den Ansprüchen 1 bis 3, dadurch gekennzeichnet, daß das die Mikro- oder Ultrafiltration verlassende Filtrat über ein mit Aktivkohle befülltes Filter geleitet wird.

6. Verfahren nach einem der Ansprüche 1 bis 5, dadurch gekennzeichnet, daß die Menge des dem Badewasser zugesetzten Filtrats aus der Mikro- oder Ultrafiltration in Abhängigkeit von dem Gehalt des Filtrats an Chlor, an organischen Halogenverbindungen oder an gelösten Salzen in der Weise geregelt wird, daß nach Überschreiten eines vorgegebenen Grenzwertes das Filtrat verworfen wird.

7. Verfahren nach Anspruch 6, dadurch gekennzeichnet, daß das den Prozeßkreislauf verlassende Filtrat zuvor einem Wärmetauscher zugeführt und in diesem im Wärmetausch mit Frischwasser gekühlt wird, das dem Badewasserkreislauf zugeführt wird.

8. Verfahren nach einem der Ansprüche 1 bis 7, dadurch gekennzeichnet, daß das gesamte Filtrat der Mikro- oder Ultrafiltrationseinheit oder ein Teilstrom davon bei einem zu hohen Gehalt des Filtrats an gelösten Stoffen mittels einer Entsalzungseinheit behandelt wird, wobei nach der Behandlung der salzarme Teilstrom dem Badewasserkreislauf zugegeben wird.
